# EUROPEAN PATENT APPLICATION

(11) **EP 4 838 030 A1**
(43) Date of publication of application: **11.11.2026**
(21) Application number: 25738373.7
(22) Date of filing: 06.01.2025
(51) Int. Cl.: E04H 4/16, B08B 13/00, B08B 9/087, G05D 1/43, B60F 3/00

(54) **POOL CLEANING ROBOT AND POOL CLEANING SYSTEM**

(30) Priority: 08.01.2024 CN 202420047759 U; 08.01.2024 CN 202420041728 U; 22.04.2024 CN 202420845718 U
(71) Applicant: WYBOTICS Co., LTD., Tianjin 300462 (CN)
(72) Inventor: GENG, Cuixiao, Tianjin 300462 (CN); CEN, Pu, Tianjin 300462 (CN); YU, Qian, Tianjin 300462 (CN)
(74) Representative: Winter, Brandl - Partnerschaft mbB
(86) International application number: PCT/CN2025/070851
(87) International publication number: WO 2025/148842

(57) **Abstract**

The present application provides a pool cleaning robot and a pool cleaning system comprising the same. The pool cleaning robot comprises: a body; a filtering device arranged on the body, the filtering device being provided with a dirt holding space; a buoyancy control device arranged on the body, the buoyancy control device being configured to enable the pool cleaning robot to switch between a first mode and a second mode; wherein, when in the first mode, the pool cleaning robot is at a water surface, and when in the second mode, the pool cleaning robot is located underwater and in contact with a bottom wall of a pool. When in the first mode, the pool cleaning robot is at the water surface and can clean floating debris in the pool; when in the second mode, the pool cleaning robot is located underwater and in contact with the bottom wall of the pool, thereby enabling the cleaning of the bottom of the pool. Accordingly, the number of pool cleaning robots used can be reduced, resulting in reduced usage cost.

## Description

The present application claims priority to Chinese Patent Application No. 202420845718.X, entitled "Pool Cleaning Robot and Pool Cleaning System Comprising The Same" and filed with the China National Intellectual Property Administration on April 22, 2024; Chinese Patent Application No. 202420047759.4, entitled "Pool Cleaning Robot" and filed with the China National Intellectual Property Administration on January 8, 2024; and Chinese Patent Application No. 202420041728.8, also entitled "Pool Cleaning Robot" and filed with the China National Intellectual Property Administration on January 8, 2024. The entire contents of the above three patent applications are incorporated herein by reference.

### TECHNICAL FIELD

The present application relates to the field of pool cleaning technologies, and in particular, to a pool cleaning robot and a pool cleaning system.

### BACKGROUND

In the related art, the cleaning of a pool is performed by multiple cooperating robots. For example, some robots are designed to clean only the bottom of the pool, while other robots float on the surface of the pool to collect floating debris. However, such collaborative operation of multiple robots inevitably increases the overall usage cost for the robots.

### SUMMARY

The present application provides a pool cleaning robot capable of cleaning debris at the bottom of a pool and at the surface of the liquid, which thereby can reduce the number of cleaning robots to reduce usage cost.

To achieve the above objective, an embodiment of a first aspect of the present application provides a pool cleaning robot, comprising: a body; a filtering device arranged on the body, the filtering device being provided with a dirt holding space; and a buoyancy control device arranged on the body, the buoyancy control device being configured to enable the pool cleaning robot to switch between a first mode and a second mode. Wherein, when in the first mode, the pool cleaning robot is at a water surface, and when in the second mode, the pool cleaning robot is located underwater and in contact with a bottom wall of a pool.

An embodiment of a second aspect of the present application provides a pool cleaning system, comprising: a base station; and the pool cleaning robot according to the embodiment of the first aspect, the pool cleaning robot having a return-to-base mode, wherein, when in the return-to-base mode, the pool cleaning robot moves toward the base station based on a signal from an image capturing device.

In the embodiments of the present application, the pool cleaning robot is provided with a buoyancy control device, enabling the pool cleaning robot to have a first mode and a second mode. When in the first mode, the pool cleaning robot is located at the water surface and can clean debris floating in the pool. When in the second mode, the pool cleaning robot is located underwater and in contact with the bottom wall of the pool, thereby enabling cleaning of the bottom of the pool. Accordingly, the number of pool cleaning robots used can be reduced, resulting in reduced usage cost.

### BRIEF DESCRIPTION OF DRAWINGS

In order to illustrate the technical solutions in the embodiments of the present application or in the prior art more clearly, a brief introduction to the drawings required for describing embodiments or the prior art is provided below. It is apparent that the drawings described below are only some embodiments of the present application. For those of ordinary skill in the art, other drawings can also be obtained based on these drawings without any creative effort.
Fig. 1 is a first schematic diagram illustrating the cooperation between a pool cleaning system according to an embodiment of the present application and a pool;
Fig. 2 is a second schematic diagram illustrating the cooperation between a pool cleaning system according to an embodiment of the present application and a pool;
Fig. 3 is a third schematic diagram illustrating the cooperation between a pool cleaning system according to an embodiment of the present application and a pool;
Fig. 4 is a first schematic structural diagram of a pool cleaning robot according to an embodiment of the present application;
Fig. 5 is a second schematic structural diagram of a pool cleaning robot according to an embodiment of the present application;
Fig. 6 is a third schematic structural diagram of a pool cleaning robot according to an embodiment of the present application;
Fig. 7 is a fourth schematic structural diagram of a pool cleaning robot according to an embodiment of the present application;
Fig. 8 is a fifth schematic structural diagram of a pool cleaning robot according to an embodiment of the present application;
Fig. 9 is a schematic diagram illustrating a traveling module of a pool cleaning robot according to an embodiment of the present application in contact with the surface of a pool;
Fig. 10 is a schematic diagram illustrating a traveling module of a pool cleaning robot according to an embodiment of the present application separated from the surface of a pool;
Fig. 11 is a first schematic structural diagram of a pool cleaning robot with a cover in an open position according to an embodiment of the present application;
Fig. 12 is a second schematic structural diagram of a pool cleaning robot with a cover in an open position according to an embodiment of the present application;
Fig. 13 is a schematic structural diagram of a pool cleaning robot with a cover in a closed position according to an embodiment of the present application;
Fig. 14 is a first schematic diagram illustrating the separation between a filtering module and a body of a pool cleaning robot according to an embodiment of the present application;
Fig. 15 is a second schematic diagram illustrating the separation between a filtering module and a body of a pool cleaning robot according to an embodiment of the present application;
Fig. 16 is a schematic structural diagram of a pool cleaning robot according to an embodiment of the present application;
Fig. 17 is a third schematic diagram illustrating the separation between a filtering module and a body of a pool cleaning robot according to an embodiment of the present application;
Fig. 18 is a sixth schematic structural diagram of a pool cleaning robot according to an embodiment of the present application;
Fig. 19 is a seventh schematic structural diagram of a pool cleaning robot according to an embodiment of the present application;
Fig. 20 is an eighth schematic structural diagram of a pool cleaning robot according to an embodiment of the present application;
Fig. 21 is a cross-sectional view of a pool cleaning robot according to an embodiment of the present application.

### DETAILED DESCRIPTION

In order to make the objectives, technical solutions, and advantages of the present application clearer and more understandable, the present application will be further described in detail below in conjunction with the accompanying drawings and embodiments. It should be understood that the specific embodiments described herein are merely intended to explain the present application and are not intended to limit the present application.

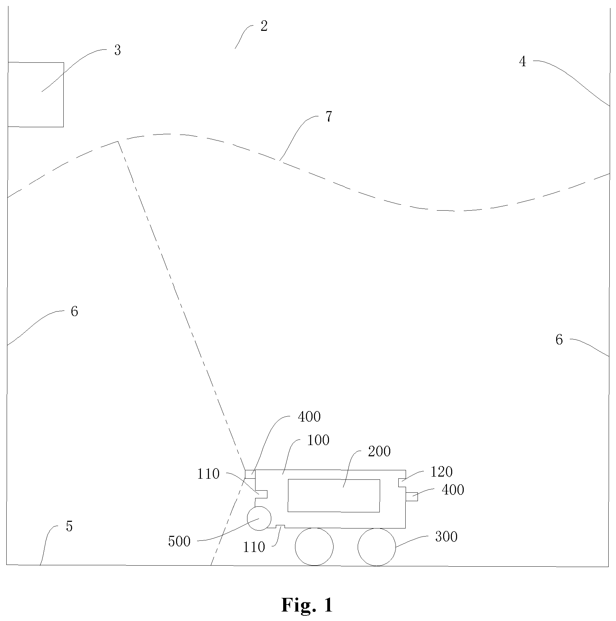

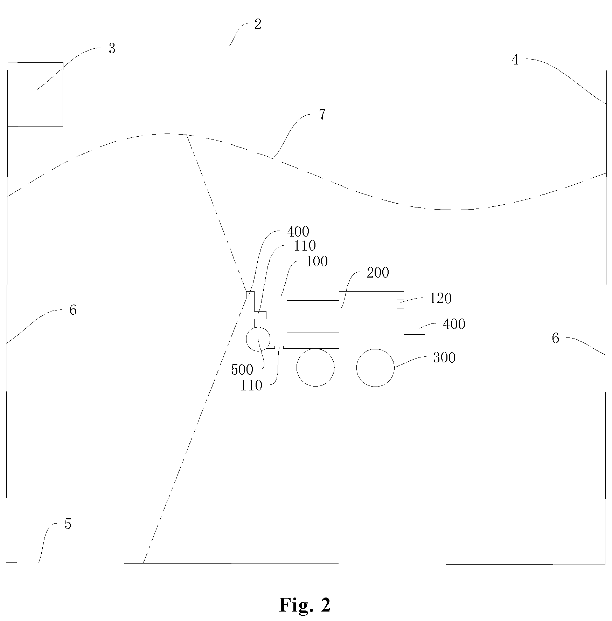

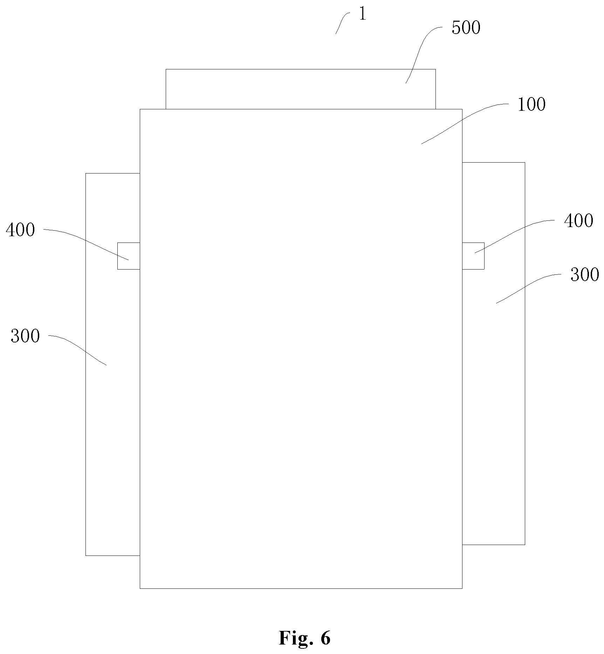

An embodiment of a first aspect of the present application provides a pool cleaning robot. As shown in Figs. 1 to 6, a pool cleaning robot 1 according to the embodiment of the present application comprises a body 100, a filtering device 200, a traveling device 300, and a buoyancy control device 800. A pool 4 may be a swimming pool.

The body 100 is provided with a water inlet 110 and a water outlet 120. The filtering device 200 is arranged on the body 100 and is provided with a dirt holding space. The filtering device 200 is in communication with both the water inlet 110 and the water outlet 120. Liquid in the pool 4 flows into the filtering device 200 through the water inlet 110, and the filtered liquid is discharged from the water outlet 120. The water inlet 110 and the water outlet 120 may be arranged on two opposite sides of the body 100.

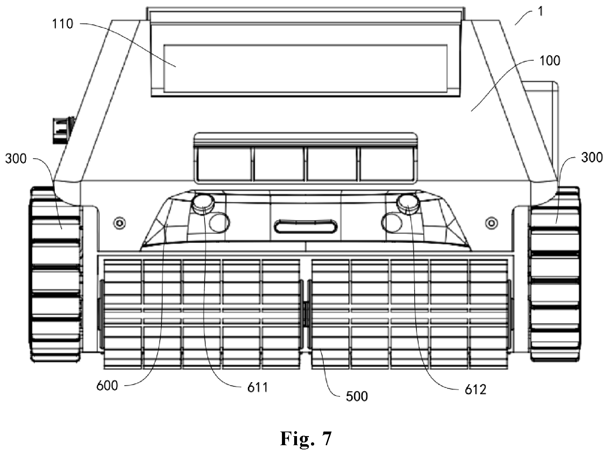

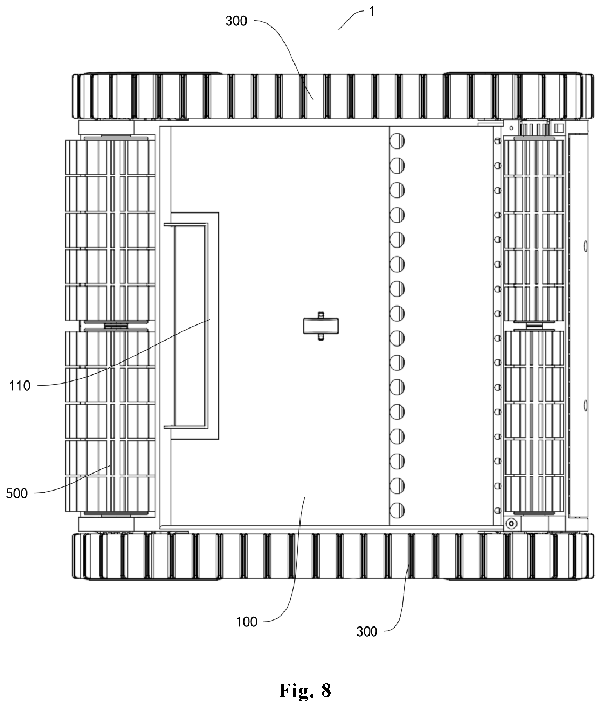

For example, as shown in Figs. 7 and 8, in a moving direction of the pool cleaning robot 1, an end of the body 100 facing forward is defined as a front end, and an end of the body 100 facing backward is defined as a rear end. The water inlet 110 is provided on an end face at the front end of the body 100, and the water outlet 120 is provided on an end face at the rear end of the body 100. The filtering device 200 is located between the water inlet 110 and the water outlet 120, such that the liquid in the pool 4 can enter the filtering device 200 through the water inlet 110 more easily, and also can flow out of the filtering device 200 from the water outlet 120 more easily.

Alternatively, the water inlet 110 is provided on a bottom surface of the body 100, and the water outlet 120 is provided on an end face at the rear end of the body 100. When the pool cleaning robot 1 cleans a bottom wall 5 of the pool 4, debris at the bottom wall 5 of the pool 4 can enter the filtering device 200 through the water inlet 110 at the bottom surface of the body 100, and then flow out of the filtering device 200 from the water outlet 120.

Of course, both the bottom surface of the body 100 and the end face at the front end of the body 100 may be provided with water inlets 110, that is, the body 100 may have at least two water inlets 110 distributed on different sides of the body 100.

The traveling device 300 is arranged on the body 100, and is configured to contact the bottom wall 5 and/or a side wall 6 of the pool 4. The traveling device 300 may comprise rotating wheels or caterpillar tracks. The traveling device 300 contacts the bottom wall 5 of the pool 4 and generates friction. When the traveling device 300 rotates relative to the body 100, the pool cleaning robot 1 moves on the bottom wall 5 of the pool 4, thereby cleaning debris at the bottom wall 5 of the pool 4. The traveling device 300 contacts the side wall 6 of the pool 4 and generates friction. When the traveling device 300 rotates relative to the body 100, the pool cleaning robot 1 moves on the side wall 6 of the pool 4, thereby cleaning debris at the side wall 6 of the pool 4.

The buoyancy control device 800 is arranged on the body 100, and is configured to enable the pool cleaning robot 1 to switch between a first mode and a second mode. When in the first mode, the pool cleaning robot 1 is located at the water surface; when in the second mode, the pool cleaning robot 1 is located underwater and in contact with the bottom wall of the pool. The buoyancy control device 800 may enable the pool cleaning robot 1 to switch between a traveling mode and a floating mode by changing its own gravity, volume, or output power. It should be noted that by changing the output power, the buoyancy control device can apply different driving forces in a vertical direction to the pool cleaning robot 1.

The pool cleaning robot 1 of an embodiment of the present application is provided with the buoyancy control device 800, enabling the pool cleaning robot 1 to have a first mode and a second mode. When in the first mode, the pool cleaning robot 1 is at the water surface, and then can clean floating debris in the pool 4. When in the second mode, the pool cleaning robot 1 is located underwater and in contact with the bottom wall 5 of the pool 4, and then can clean the bottom of the pool 4. Accordingly, the number of pool cleaning robots 1 used can be reduced, thereby lowering usage cost.

In some embodiments, the pool cleaning robot 1 further comprises a debris identification device 400 arranged on the body 100. The debris identification device 400 is configured to identify debris located at the liquid surface 7 of the pool and/or at the bottom wall 5 of the pool 4. For example, the debris identification device 400 is arranged on an upper surface of the body 100, or at the front end of the body 100, or at the rear end of the body 100, or on a side surface of the body 100, or on a lower surface at the rear end of the body 100, and is configured to identify debris at the liquid surface 7 of the pool 4. The debris identification device 400 may be an image capturing device having the capability of acquiring images, such as a camera or a video camera, or the like; or the debris identification device 400 may be a sensor having an object detection function, such as an ultrasonic sensor, an infrared sensor, or an optical sensor, or the like.

Specifically, the pool cleaning robot 1 may have a traveling mode (second mode) and a floating mode (first mode). When the pool cleaning robot 1 is in the traveling mode, the traveling device 300 is configured to contact the bottom wall 5 or the side wall 6 of the pool 4, and then the cleaning is mainly performed on the debris at the bottom of the pool 4. When the pool cleaning robot 1 is in the floating mode, the pool cleaning robot 1 floats in the liquid in the pool 4 or floats at the liquid surface 7. That is, the traveling device 300 does not contact the bottom wall 5 or the side wall 6 of the pool 4. When the pool cleaning robot 1 is in the floating mode, the cleaning is mainly performed on the debris floating in the pool 4.

When the pool cleaning robot 1 is in the traveling mode and starts to clean the debris at the bottom of the pool 4, the debris identification device 400 is configured to identify whether there is debris at the liquid surface 7. If debris is present, the pool cleaning robot 1 moves directly upward to the location of the debris. The movement direction of the pool cleaning robot 1 is mainly vertical, therefore, the travel distance at the liquid surface 7 is minimized, which avoids significant fluctuation of the liquid surface 7 and improves the efficiency of debris cleaning.

In some embodiments, when the pool cleaning robot 1 is in the first mode, the image capturing device is configured to capture an image of the liquid surface of the pool 4, and/or the image capturing device is configured to capture an image of the bottom wall of the pool 4, such that the pool cleaning robot 1 can better plan a cleaning path based on the distribution of debris at the liquid surface and/or at the bottom of the pool.

In some embodiments of the present application, as shown in Figs. 1 to 3 (where the long-short dash line in the drawings schematically indicates the boundary of the field of view of the debris identification device 400), the debris identification device 400 may be fixedly connected to the pool cleaning robot 1. The debris identification device 400 is arranged on one of the end face at the front end, the end face at the rear end, or side surfaces of the body 100. That is, the debris identification device 400 is arranged on a surface at one side of the body 100 in a horizontal direction, such that the debris identification device 400 can simultaneously capture images of both the bottom wall 5 of the pool 4 and the liquid surface 7 of the pool 4.

In this way, the debris identification device 400 can capture images simultaneously over a wider range and can identify debris both at the liquid surface 7 and at the bottom wall 5 without switching positions, thereby achieving better sealing performance.

By way of examples in some cases where the debris identification device 400 comprises an image capturing device, the image capturing device can be electrically connected to a controller of the pool cleaning robot 1. At the same time, the buoyancy control device 800 is also electrically connected to the controller of the pool cleaning robot 1. The controller can control the buoyancy control device 800 to drive the pool cleaning robot 1 to float upward, such that the image capturing device can observe the liquid surface 7 of the pool 4 and thereby identify the debris floating at the liquid surface 7.

When the pool cleaning robot 1 is in the traveling mode and starts to clean the debris at the bottom of the pool 4, since the debris is typically located at the bottom of the pool 4, the pool cleaning robot 1 travels on the entire bottom wall 5 of the pool 4. Therefore, the debris identification device 400 may not capture images, thereby reducing energy consumption.

After the pool cleaning robot 1 has cleaned the debris at the bottom of the pool 4, the debris identification device 400 can capture an image of the bottom of the pool 4, such as images of areas near the side wall 6 and the corners along the side edges of the pool 4, and determine whether any residual debris remains at the bottom of the pool 4. Secondary cleaning can be performed on the residual debris, to optimize the cleaning effect.

After the pool cleaning robot 1 has finished cleaning the debris at the bottom of the pool 4, the debris identification device 400 can capture an image of the liquid surface 7 to determine whether there is any debris at the liquid surface. If there is no debris at the liquid surface 7, the pool cleaning robot 1 does not need to clean the liquid surface 7. If debris is present at the liquid surface 7, the location of the debris can be obtained, allowing the pool cleaning robot 1 to approach the debris directly in the vertical direction. This minimizes the travel distance of the pool cleaning robot 1 at the liquid surface 7, thereby reducing the fluctuation of the liquid surface 7 and preventing the debris at the liquid surface 7 from being moved excessively by the fluctuations of the liquid surface 7, ultimately improving the cleaning efficiency.

When the pool cleaning robot 1 is floating in the pool 4, the debris identification device 400 can capture images of the surroundings in the horizontal direction of the pool cleaning robot 1, such as images near the side wall 6 and the corners along the side edges of the pool 4, and determine whether any residual debris remains in the pool 4. Secondary cleaning can be performed on the residual debris, to optimize the cleaning effect. Additionally, since the travel distance of the pool cleaning robot 1 in the liquid within the pool 4 is minimized, the fluctuation of the liquid is reduced, which improves cleaning efficiency.

In other embodiments of the present application, the debris identification device 400 is rotatable relative to the body 100 between a first position and a second position. When the debris identification device 400 is in the first position, it captures an image of the liquid surface 7 of the pool 4. When the debris identification device 400 is in the second position, it captures an image of the side wall 6 of the pool 4.

When the pool cleaning robot 1 is in the traveling mode and starts to clean the debris at the bottom of the pool 4, since the debris is typically located at the bottom of the pool 4, the pool cleaning robot 1 travels on the entire bottom wall 5 of the pool 4. Therefore, the debris identification device 400 may not capture images, thereby reducing energy consumption.

After the pool cleaning robot 1 has cleaned the debris at the bottom of the pool 4, the debris identification device 400 can be located in the second position to capture an image of the bottom of the pool 4, such as images of areas near the side wall 6 and the corners along the side edges of the pool 4, and determine whether any residual debris remains at the bottom of the pool 4. Secondary cleaning can be performed on the residual debris, to optimize the cleaning effect.

After the pool cleaning robot 1 has finished cleaning the debris at the bottom of the pool 4, the debris identification device 400 can be located in the first position to capture an image of the liquid surface 7 to determine whether there is any debris at the liquid surface 7. If there is no debris at the liquid surface 7, the pool cleaning robot 1 does not need to clean the liquid surface 7. If debris is present at the liquid surface 7, the location of the debris can be obtained, allowing the pool cleaning robot 1 to approach the debris directly in the vertical direction. This minimizes the travel distance of the pool cleaning robot 1 at the liquid surface 7, thereby reducing the fluctuation of the liquid surface 7 and preventing the debris at the liquid surface 7 from being moved excessively by the fluctuations of the liquid surface 7, ultimately improving cleaning efficiency.

When the pool cleaning robot 1 is floating in the pool 4, the debris identification device 400 can be at the second position to capture images of the surroundings in the horizontal direction of the pool cleaning robot 1, such as images near the side wall 6 and the corners along the side edges of the pool 4, and determine whether any residual debris remains in the pool 4. Secondary cleaning can be performed on the residual debris, to optimize the cleaning effect. Additionally, since the travel distance of the pool cleaning robot 1 in the liquid within the pool 4 is minimized, the fluctuation of the liquid in the pool 4 is reduced, which improves cleaning efficiency.

In some specific embodiments of the present application, as shown in Figs. 1-3 and 6, a plurality of debris identification devices 400 are provided. The plurality of debris identification devices 400 are at least arranged on two different side surfaces of the body 100. The body 100 also has lateral surfaces (such as a left side surface and a right side surface), each of which is located on one side of the body 100 in the horizontal direction. Each lateral surface is connected with the front end and the rear end of the body 100 and is located between the front end and the rear end of the body 100 in the movement direction of the pool cleaning robot 1.

For example, at least one debris identification device 400 is provided at the front end of the body 100, and at least another debris identification device 400 is provided at the rear end of the body 100. Alternatively, at least one debris identification device 400 is provided at the front end of the body 100, and at least another debris identification device 400 is provided at a lateral surface of the body 100. Alternatively, at least one debris identification device 400 is provided at the rear end of the body 100, and at least another debris identification device 400 is provided at a lateral surface of the body 100. In still another alternative, at least one debris identification device 400 is provided at the front end of the body 100, at least one debris identification device 400 is provided at the rear end of the body 100, and at least another debris identification device 400 is provided at a lateral surface of the body 100.

Certainly, the body 100 may be provided with debris identification devices 400 on all four side surfaces in the horizontal direction, i.e., at the front end, rear end, and two lateral surfaces of the body 100.

By providing debris identification devices 400 on different side surfaces of the body 100, the image capture range of the pool cleaning robot 1 can be enlarged, enabling the pool cleaning robot 1 to obtain images of the liquid surface 7 and the pool edges more efficiently, and to determine whether debris is present at the water surface 7 or near the pool edges, thereby completing the cleaning of the pool 4 in a shorter period of time and improving cleaning efficiency.

Further, a plurality of debris identification devices 400 are provided on at least two adjacent side surfaces of the body 100. For example, at least one debris identification device 400 is provided at the front end of the body 100, and at least another debris identification device 400 is provided on a lateral surface (e.g., the left side surface or right side surface) of the body 100. Alternatively, at least one debris identification device 400 is provided at the rear end of the body 100, and at least another debris identification device 400 is provided on a lateral surface of the body 100.

The two adjacent side surfaces of the body 100 are located in two different directions. For example, the body 100 has a first direction and a second direction, the body 100 has a front end and a rear end oppositely arranged in the first direction, and lateral surfaces in the second direction, the first and second directions being perpendicular to each other. Therefore, a plurality of debris identification devices 400 can capture images in both the first and second directions of the body 100, thereby allowing the debris identification devices 400 to obtain images from different directions, that is, to obtain images of the liquid surface 7 and the pool edges more efficiently. Therefore, whether debris is present on the liquid surface 7 or near the pool edges can be determined, and the cleaning of the pool 4 is completed in a shorter period of time, thereby improving cleaning efficiency.

In some specific embodiments of the present application, as shown in Figs. 1 to 4 and Fig. 6, the pool cleaning robot 1 further comprises a roller 500. The roller 500 is rotatably arranged on the body 100 and is located on a same side of the body 100 as the water inlet 110. The roller 500 is configured to drive the liquid in the pool 4 to flow toward the water inlet 110. This can improve the efficiency at which the liquid in the pool 4 flows into the filtering device 200, thereby allowing the cleaning of the pool 4 to be completed more quickly.

In addition, the debris identification device 400 and the roller 500 are arranged on a same side of the body 100. The roller 500 may protrude beyond a side surface at the front end of the body 100 and can first come into contact with the liquid in the forward direction of the pool cleaning robot 1, thereby primarily guiding uncleaned liquid to the filtering device 200. Further, the debris identification device 400 is located above the roller 500, thus preventing the roller 500 from obstructing the field of view of the image capturing device of the debris identification device 400, and ensuring that the debris identification device 400 can capture a wider range of images of the liquid surface 7.

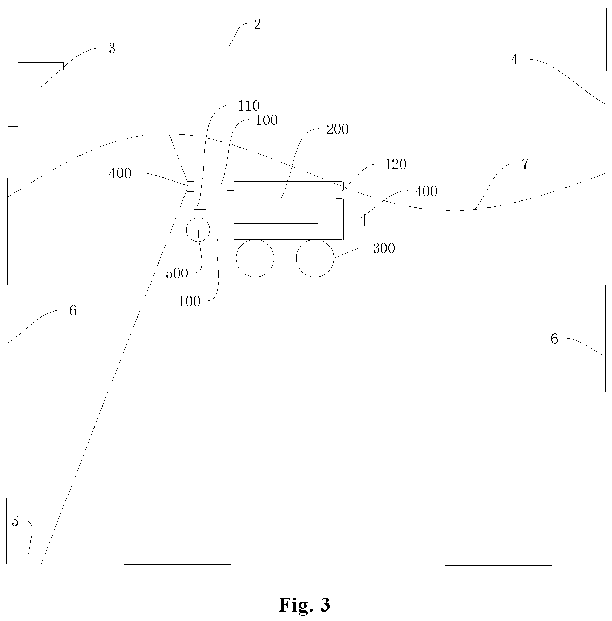

In some specific embodiments of the present application, as shown in Figs. 3 to 6, the traveling device 300 is provided on two opposite sides of the body 100 and protrudes beyond side surfaces of the body 100, thus increasing the surface area of the traveling device 300 and improving the contact area between the traveling device 300 and the bottom wall 5 of the pool 4. This increases friction between the traveling device 300 and the bottom wall 5 of the pool 4, resulting in more stable movement of the pool cleaning robot 1.

In addition, the debris identification device 400 and the traveling device 300 are arranged on a same side of the body 100, and the debris identification device 400 is located above the traveling device 300. This prevents the traveling device 300 from obstructing the field of view of the image capturing device of the debris identification device 400, thereby ensuring that the debris identification device 400 can capture a wider range of images of the liquid surface 7.

In some specific embodiments of the present application, the debris identification device 400 is rotatable relative to the body 100 in the vertical direction; the debris identification device 400 is rotatable relative to the body 100 in the horizontal direction. Specifically, when the debris identification device 400 is below the liquid surface 7 of the pool 4, the debris identification device 400 rotates mainly in the vertical direction and faces toward the liquid surface 7 to capture an image of the liquid surface, so as to detect whether there is debris at the liquid surface 7 and determine the location of the debris. When the debris identification device 400 is floating at the liquid surface 7 of the pool 4, the debris identification device 400 rotates mainly in the horizontal direction and faces the side wall 6 of the pool 4 to capture images near the pool edges, so as to detect whether there is debris along the pool edges and determine the location of the debris.

This allows the debris identification device 400 to have a wider range of rotation and more flexible rotation. When the debris identification device 400 is located below the liquid surface 7 or floating at the liquid surface 7, the debris identification device 400 can be configured to capture images of different regions, thereby identifying the debris conditions in the pool 4 more effectively and improving the cleaning effect of the pool 4.

In some specific embodiments of the present application, the debris identification device 400 is movable relative to the body 100 between an extended position and a retracted position. When in the retracted position, the debris identification device 400 does not protrude beyond an outer surface of the body 100. When in the extended position, at least a portion of the debris identification device 400 protrudes beyond an outer surface of the body 100.

When a user manually cleans debris at the liquid surface 7 and the pool edges, or when the debris identification device 400 is used to clean the bottom of the pool 4, the debris identification device 400 does not need to capture images of the liquid surface 7. In such cases, the debris identification device 400 may remain in the retracted position. This not only reduces energy consumption and extends the operating time of the pool cleaning robot 1, but also helps avoid collisions between the debris identification device 400 and objects in the pool 4, thereby reducing the likelihood of damage of the debris identification device 400.

When the user needs the pool cleaning robot 1 to clean debris at the liquid surface 7 and along the pool edges, or after the debris identification device 400 has completed cleaning the bottom of the pool 4, the debris identification device 400 needs to capture an image of the liquid surface 7. In such cases, the debris identification device 400 may be located in the extended position and protrude beyond the outer surface of the body 100, so as to capture the image of the liquid surface 7 more accurately.

In some specific embodiments of the present application, as shown in Fig. 3, the pool cleaning robot 1 further comprises a base, a signal transmission device 610, and a functional device. The base is detachably provided on the body 100. The debris identification device 400, the signal transmission device 610, and the functional device are all arranged on the base. Wherein, the signal transmission device 610 can be connected to both the debris identification device 400 and the functional device to feedback signal data from the debris identification device 400 and a first functional device 620 to a control device.

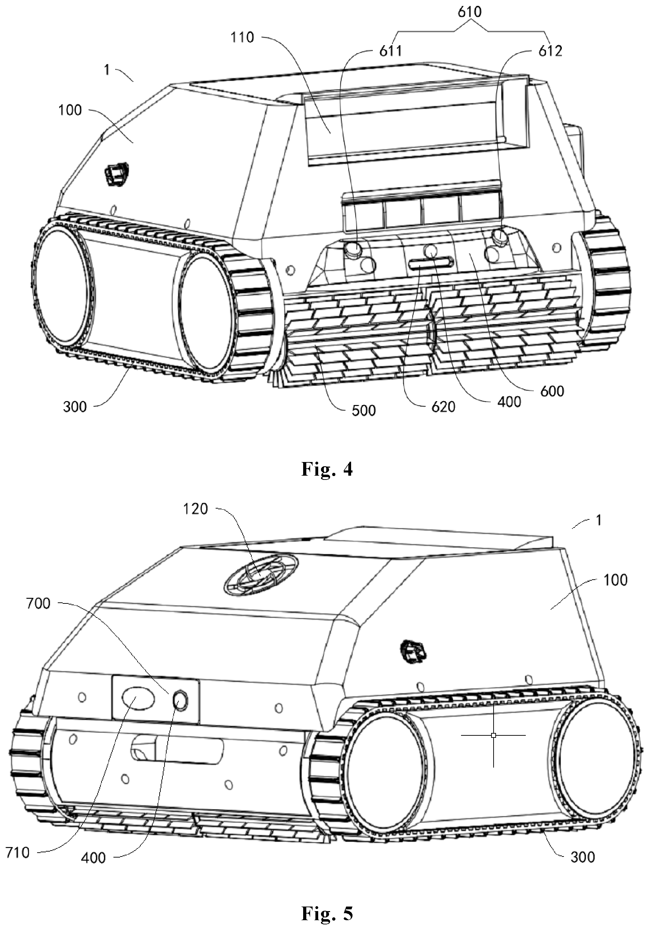

Specifically, as shown in Fig. 4, the pool cleaning robot 1 further comprises a first base 600, a signal transmission device 610, and a first functional device 620. Wherein, the signal transmission device 610 can comprise a signal receiving sensor 611 and a signal sending sensor 612. The signal receiving sensor 611 is configured to receive a signal sent by the control device (e.g., a base station 3, a mobile phone, a tablet, a remote controller); the signal sending sensor 612 is configured to transmit a signal to the control device (e.g., the base station 3, mobile phone, tablet, remote controller), enabling communication between the pool cleaning robot 1 and the control device. The signal transmission device 610 can assist the pool cleaning robot 1 in returning to the base station 3.

The first functional device 620 can comprise at least one of a distance sensor, a pressure sensor, and a depth sensor. The distance sensor is configured to detect distances between the pool cleaning robot 1 and obstacles in the forward direction, preventing the pool cleaning robot 1 from colliding during its forward movement and reducing the likelihood of damage of the pool cleaning robot 1. The pressure sensor is configured to detect whether the pool cleaning robot 1 is below the liquid surface 7. The depth sensor is configured to detect the depth of the pool cleaning robot 1 in the liquid within the pool 4.

The first base 600 is detachably arranged on the body 100 and is located on a same side of the body 100 as the water inlet 110. In other words, the first base 600 is detachably arranged at the front end of the body 100. The debris identification device 400, the signal transmission device 610, and the first functional device 620 are all arranged at the first base 600. The signal transmission device 610 can be connected to both the debris identification device 400 and the first functional device 620 to feedback signal data from the debris identification device 400 and the first functional device 620 to the control device.

By integrating the debris identification device 400, the signal transmission device 610, and the first functional device 620 on the first base 600, the connections among the debris identification device 400, the signal transmission device 610, and the first functional device 620 are more reliable.

When the first base 600 is mounted on the body 100, the mounting and positioning of the debris identification device 400, the signal transmission device 610, and the first functional device 620 relative to the body 100 can be completed. When the first base 600 is detached from the body 100, the separation of the debris identification device 400, the signal transmission device 610, and the first functional device 620 from the body 100 can also be completed. In this way, the modular connectivity of the pool cleaning robot 1 is achieved, which facilitates the mounting and dismounting of the pool cleaning robot 1, and subsequent inspection and maintenance can be performed without having to detach each component individually, making the process more convenient.

As shown in Fig. 5, the pool cleaning robot 1 may also comprise a second base 700, a signal transmission device 610, and a second functional device 710. Wherein, the signal transmission device 610 may comprise a signal receiving sensor 611 which is configured to receive a signal sent by the control device (such as the base station 3, mobile phone, tablet, or remote controller), and a signal sending sensor 612 which is configured to transmit a signal to the control device (such as the base station 3, mobile phone, tablet, or remote controller). This enables communication between the pool cleaning robot 1 and the control device.

The second base 700 is detachably arranged on the body 100 and is located at a same side of the body 100 as the water outlet 120. In other words, the second base 700 is detachably arranged at the rear end of the body 100. The debris identification device 400, the signal transmission device 610, and the second functional device 710 are arranged on the second base 700. Wherein, the signal transmission device 610 may be connected to the debris identification device 400 and the second functional device 710 respectively to feedback signal data from the debris identification device 400 and the second functional device 710 to the control device.

The second functional device 710 may comprise at least one of a distance sensor, a pressure sensor, and a depth sensor. The distance sensor is configured to detect the distances between the pool cleaning robot 1 and obstacles behind it to avoid collisions of the pool cleaning robot 1 during turning, thereby reducing the likelihood of damage of the pool cleaning robot 1. The pressure sensor is configured to detect whether the pool cleaning robot 1 is located below the liquid surface 7. The depth sensor is configured to detect the depth of the pool cleaning robot 1 in the liquid within the pool 4.

By integrating the debris identification device 400, the signal transmission device 610, and the second functional device 710 on the second base 700, the connections among the debris identification device 400, the signal transmission device 610, and the second functional device 710 are more reliable.

When the second base 700 is mounted to the body 100, the mounting and positioning of the debris identification device 400, the signal transmission device 610, and the second functional device 710 relative to the body 100 can be completed. When the second base 700 is detached from the body 100, the separation of the debris identification device 400, the signal transmission device 610, and the second functional device 710 from the body 100 can also be completed. In this way, the modular connectivity of the pool cleaning robot 1 is achieved, which facilitates the mounting and dismounting of the pool cleaning robot 1, and subsequent inspection and maintenance can be performed without having to detach each component individually, making the process more convenient.

In some embodiments of the present application, a plurality of debris identification devices 400 may be provided. One debris identification device 400 is provided on the first base 600, and another debris identification device 400 is provided on the second base 700. One of the first base 600 and the second base 700 is provided with a signal transmission device 610.

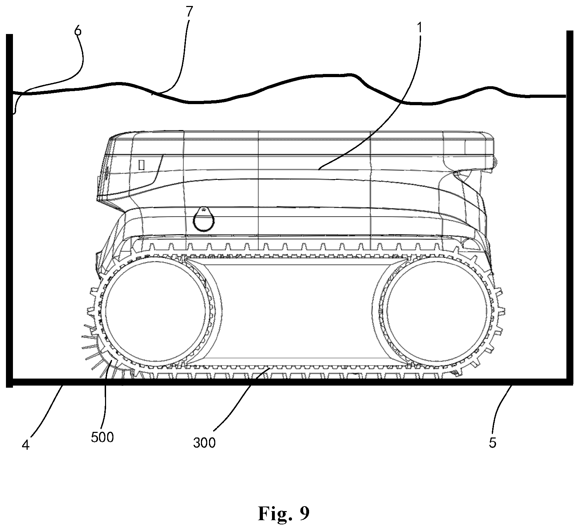

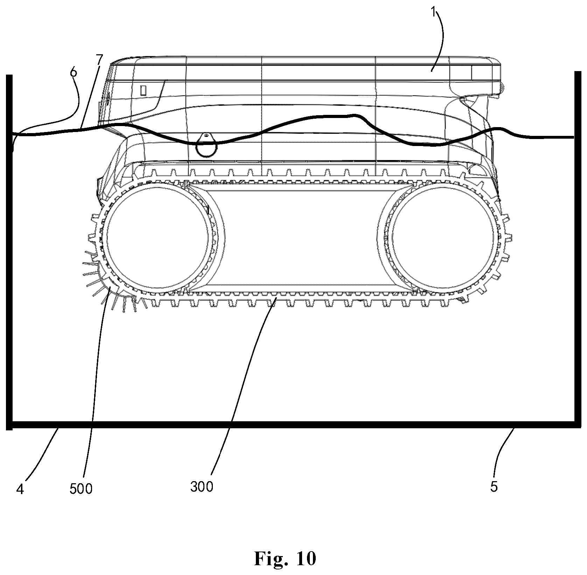

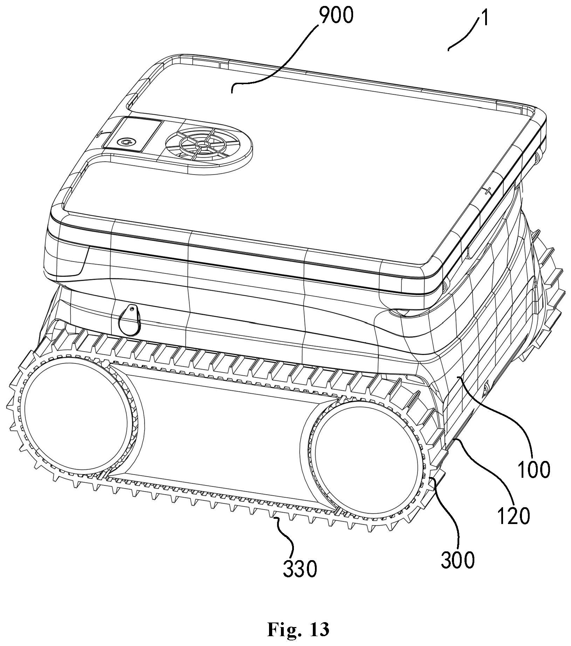

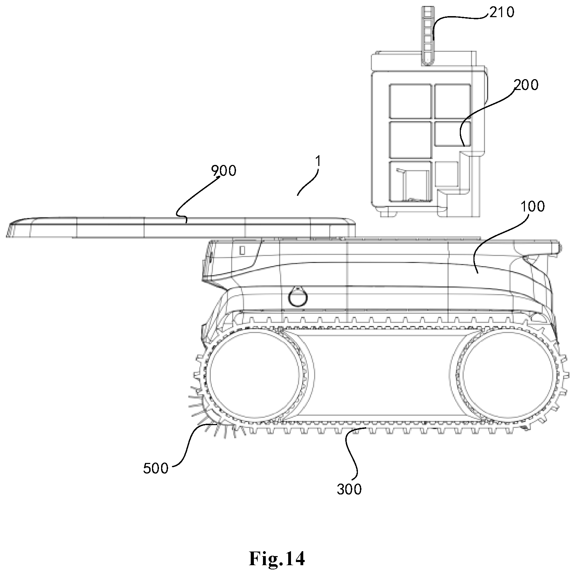

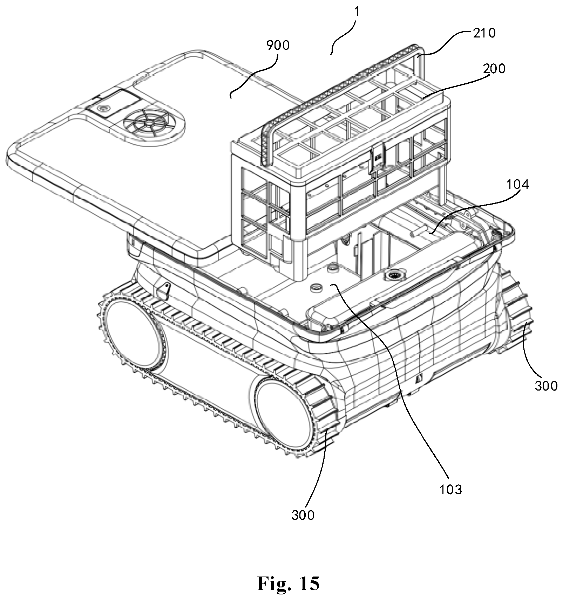

As shown in Figs. 9 to 17, in some embodiments of the present application, the body 100 is provided with a mounting cavity 103. The mounting cavity 103 is in communication with both the water inlet 110 and the water outlet 120. The filtering device 200 is detachably arranged in the mounting cavity 103 of the body 100 (for example, the filtering device 200 is arranged in the mounting cavity 103 of the body 100 such that the filtering device can be pushed into or pulled out of the mounting cavity). The pool cleaning robot 1 further comprises a traveling device 300 and a buoyancy control device 800. The traveling device 300 is rotatably arranged on the body 100 and is in contact with the surface of the pool 4. The pool cleaning robot 1 is driven to move by friction between the traveling device 300 and the surface of the pool 4. The buoyancy control device 800 is arranged on the body 100. By means of the buoyancy control device 800, the pool cleaning robot 1 descends to the bottom of the pool 4 such that the traveling device 300 comes into contact with the surface of the pool 4, and ascends to approach the liquid surface 7 of the pool 4.

The filtering device 200 is arranged in the mounting cavity 103 of the body 100 such that the filtering device can be pushed into or pulled out of the mounting cavity. Liquid in the pool 4 flows into the filtering device 200 through the water inlet 110, and the filtered liquid flows out of the pool cleaning robot 1 through the water outlet 120. The filtering device 200 filters the liquid, and most of the debris in the liquid is stored inside the filtering device 200.

The traveling device 300 is in contact with the surface of the pool 4. Through the friction between the traveling device 300 and the surfaces of the pool 4 which comprises the side wall 6 and the bottom wall 5 of the pool 4, the pool cleaning robot 1 is driven to move. The traveling device 300 may be a structure such as a caterpillar track or a roller.

The buoyancy control device 800 is configured to control the ascent or descent of the pool cleaning robot 1 in the pool 4. The buoyancy control device 800 may be a buoyancy chamber. By adjusting the volume of the buoyancy chamber and the amount of liquid contained therein, the pool cleaning robot 1 is enabled to ascend or descend in the pool 4. Alternatively, the buoyancy control device 800 may adopt a winch-based solution, in which the rotation of the winch controls the length of a rope, thereby adjusting the position of a piston to adjust the liquid volume, allowing the pool cleaning robot 1 to ascend or descend in the pool 4. In another alternative, the buoyancy control device 800 may adopt a diaphragm pump solution, in which water is pumped in or out by a diaphragm pump to adjust the liquid volume.

Compared to prior art that uses a structure such as a pull rope fixed on the poolside to pull the pool cleaning robot out of the pool, the integration of a buoyancy control device 800 into the pool cleaning robot 1 in the present application eliminates the need to additionally set up a structure on the poolside to pull the pool cleaning robot 1. This reduces cost and avoids occupying extra space at the poolside.

In the embodiment of the pool cleaning robot 1, by using the buoyancy control device 800 to move the pool cleaning robot 1 between the liquid surface 7 and the bottom of the pool, the pool cleaning robot 1 does not need to rely on friction between the traveling device 300 and the surface of the pool 4 to remain at the liquid surface 7. Therefore, the energy consumption is low when the pool cleaning robot 1 remains at the liquid surface 7. Moreover, while the pool cleaning robot 1 floats at the liquid surface 7, the filtering device 200 can be accessed without removing the pool cleaning robot 1 from the pool 4. This makes the filtering device 200 easy to be removed, ensures a simple structure and operational reliability, greatly improves the convenience of use of the pool cleaning robot 1, and reduces labor requirements.

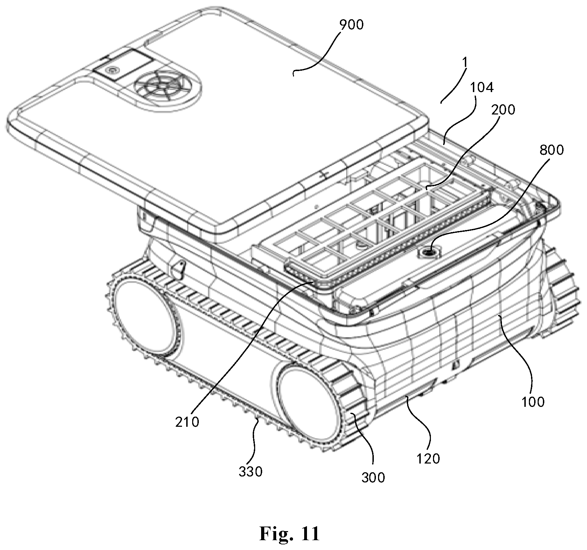

As shown in Figs. 11, 14, and 15, the body 100 is provided with an assembly and disassembly port 104, which is in communication with the mounting cavity 103. The filtering device 200 is mounted into or removed from the mounting cavity 103 through the assembly and disassembly port 104. The provision of the assembly and disassembly port 104 allows the filtering device 200 to be mounted to or dismounted from the body 100, without the need to mount or dismount the filtering device 200 through the water inlet 110 or the water outlet 120. As a result, the structural configurations of the water inlet 110 and the water outlet 120 are less constrained by the filtering device 200, allowing for more diverse structural configuration options for the water inlet 110 and the water outlet 120, which is beneficial for adapting the pool cleaning robot 1 to various scenarios.

In addition, the pool cleaning robot 1 ascends to approach the liquid surface 7 of the pool 4 by means of the buoyancy control device 800. In this way, the filtering device 200 becomes closer to the liquid surface 7 of the pool 4 when the filtering device 200 is detached from the assembly and disassembly port 104, making it more convenient for users to mount or remove the filtering device 200.

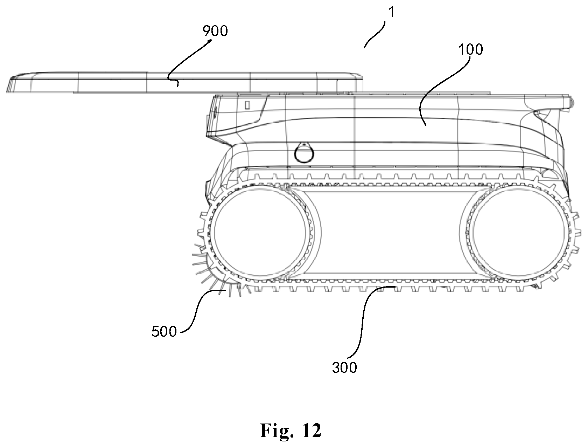

As shown in Figs. 12, 15, and 17, the pool cleaning robot 1 has a first direction and a second direction, the first direction, the second direction and a height direction of the pool cleaning robot 1 being perpendicular to each other. A rotation axis of the traveling device 300 extends along the first direction. When the traveling device 300 rotates relative to the body 100, the traveling device drives the pool cleaning robot 1 to move in the second direction. The traveling device 300 may be arranged on two opposite sides of the body 100, respectively, in the first direction, so that the forces on the two opposite sides of the body 100 in the first direction are evenly distributed, enabling more stable movement of the pool cleaning robot 1.

In one embodiment, the assembly and disassembly port 104 is provided on the upper surface of the body 100. In this way, the filtering device 200 can be mounted or dismounted when the upper surface of the body 100 is above the liquid surface 7 of the pool 4. This design reduces the required height of the pool cleaning robot 1 emerging above the liquid surface 7, thereby reducing the maximum buoyancy required from the buoyancy control device 800, which facilitates the reduction of the volume of the buoyancy control device 800 and broadens the range of selectable specifications for the buoyancy control device 800.

In another embodiment, the assembly and disassembly port 104 is provided on a side surface of the body 100. The assembly and disassembly port 104 may be located on a side surface of the body 100 in the first direction or on a side surface of the body 100 in the second direction. The side surfaces of the body 100 are connected between upper and lower surfaces of the body 100.

By providing the assembly and disassembly port 104 on a side surface of the body 100, on the one hand, compared to providing the assembly and disassembly port 104 at the bottom surface of the body 100, the required height of the pool cleaning robot 1 emerging above the liquid surface 7 is reduced, and the maximum buoyancy required from the buoyancy control device 800 is correspondingly smaller, which facilitates the reduction of the volume of the buoyancy control device 800 and broadens the range of selectable specifications for the buoyancy control device 800. On the other hand, compared to providing the assembly and disassembly port 104 on the upper surface of the body 100, this configuration allows the top surface of the body 100 to be provided with photovoltaic cells or other structures, thereby improving the utilization of the outer surface of the body 100.

As shown in Fig. 12, when the assembly and disassembly port 104 is provided on the upper surface of the body 100, the filtering device 200 and the buoyancy control device 800 are arranged in the first direction and/or second direction. In other words, the filtering device 200 and the buoyancy control device 800 are arranged in the first direction, or in the second direction, or alternatively, when a plurality of buoyancy control devices 800 are provided, one buoyancy control device 800 and the filtering device 200 are arranged in the first direction, while another buoyancy control device 800 and the filtering device 200 are arranged in the second direction.

In this way, the filtering device 200 has a larger extendable dimension in the height direction of the body 100, which helps improve the filtering efficiency of the filtering device 200. Further, the filtering device 200 is less likely to interfere with the buoyancy control device 800 when being mounted or dismounted through the mounting cavity 103, thereby enabling smoother mounting and dismounting of the filtering device 200.

By way of examples, a side of the body 100 in the first direction may be provided with a roller 500, which is configured to drive the liquid from the pool 4 into the filtering device 200 more quickly. When the assembly and disassembly port 104 is located on the upper surface of the body 100, the buoyancy control device 800 may be arranged on a side of the body 100 away from the roller 500 in the first direction, so as to prevent the buoyancy control device 800 from interfering with the filtration of the liquid within the pool 4 by the filtering device 200.

When the assembly and disassembly port 104 is arranged on a side surface of the body 100 in the first direction, the filtering device 200 and the buoyancy control device 800 are arranged in the height direction of the pool cleaning robot 1. This arrangement allows the filtering device 200 to have a larger extendable dimension in both the first and second directions, which is beneficial for enhancing the filtering efficiency of the filtering device 200. Further, the filtering device 200 is less likely to interfere with the buoyancy control device 800 when being mounted or dismounted through the mounting cavity 103, thereby enabling smoother mounting and dismounting of the filtering device 200.

When the assembly and disassembly port 104 is arranged on a side surface of the body 100 in the first direction, the buoyancy control device 800 is located below the filtering device 200. In this configuration, since the assembly and disassembly port 104 is close to the upper portion of the body 100, a smaller buoyant force provided by the buoyancy control device 800 is sufficient for the assembly and disassembly port 104 to be exposed above the liquid surface 7 of the pool 4, which is advantageous for reducing the volume of the buoyancy control device 800 and broadening the range of selectable specifications for the buoyancy control device 800. Further, when the assembly and disassembly port 104 is exposed above the liquid surface 7 of the pool 4, the buoyancy control device 800 can still continuously provide a buoyant force to the body 100, ensuring a more stable buoyant force and preventing insufficiency between the assembly and disassembly port 104 and the liquid surface 7 of the pool 4.

As shown in Figs. 12 to 15, the pool cleaning robot 1 further comprises a cover plate 900, which is movably arranged on the body 100 between an open position and a closed position. The assembly and disassembly port 104 is exposed when the cover plate 900 is in the open position; the assembly and disassembly port 104 is covered when the cover plate 900 is in the closed position.

By providing the cover plate 900, the assembly and disassembly port 104 can be covered and sealed with a shielding portion 220, which reduces the probability of the liquid in the pool 4 flowing into or out of the body 100 through the assembly and disassembly port 104, and prevents the filtered debris inside the filtering device 200 from leaking out through the assembly and disassembly port 104, thereby ensuring the cleaning effectiveness of the pool cleaning robot 1.

As shown in Figs. 12, 14, and 15, a first handle 210 is provided at a side of the filtering device 200 facing the cover plate 900. The first handle 210 is movable relative to the filtering device 200 between a lifting position and a retracted position. When the first handle 210 is in the lifting position, a portion of the first handle 210 protrudes beyond a side surface of the filtering device 200 facing the cover plate 900, allowing the first handle 210 to be lifted. When the first handle 210 is in the retracted position, the first handle 210 does not protrude beyond the side surface of the filtering device 200 facing the cover plate 900.

When the first handle 210 is in the lifting position, a gap between the first handle 210 and the filtering device 200 is increased, making it easier for a hand to grip the first handle 210 and lift the filtering device 200. When the first handle 210 is in the retracted position, the overall space occupied by the filtering device 200 and the first handle 210 is reduced, allowing the mounting cavity 103 to be designed more compactly, which facilitates the mounting of other components within the body 100. Further, the first handle 210 does not interfere with the cover plate 900, which facilitates the movement of the cover plate 900 relative to the body 100.

The cover plate 900 is provided with a first limiting structure, and the body 100 is provided with a second limiting structure. The first limiting structure abuts against the second limiting structure when the cover plate 900 is in the open position.

In this way, a relative displacement stroke between the cover plate 900 and the body 100 can be limited. During the sliding movement of the cover plate 900, the cover plate 900 will not be separated from the body 100, thereby facilitating repeated movement of the cover plate 900 between the open position and the closed position, improving the ease of use of the pool cleaning robot 1, and reducing the likelihood of the cover plate 900 being lost.

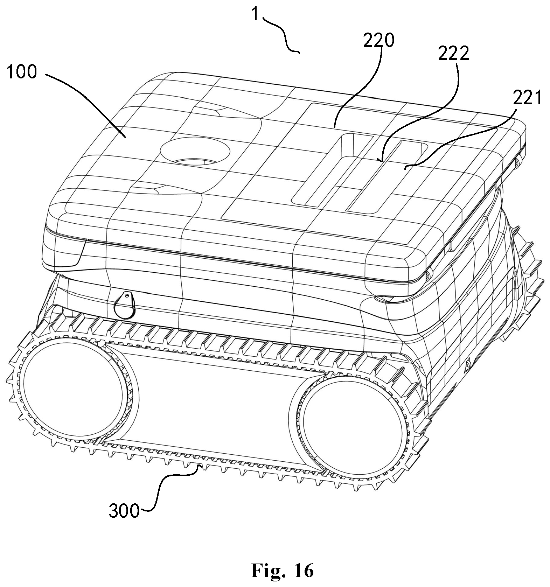

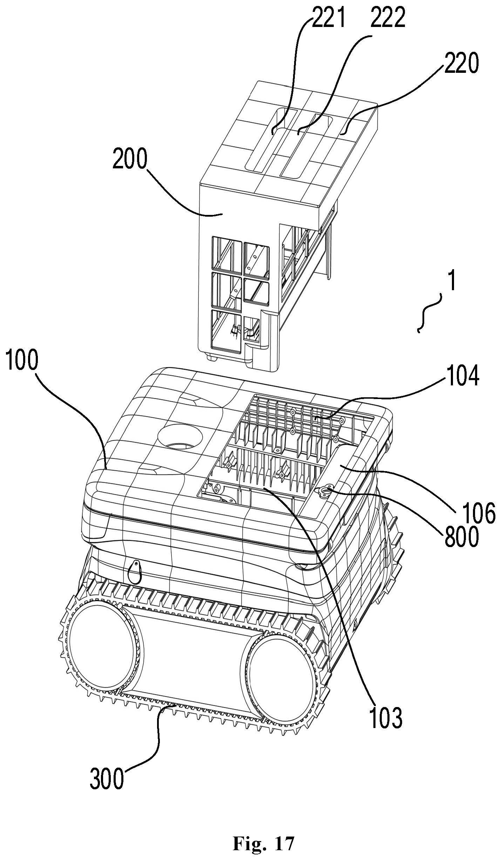

As shown in Figs. 16 and 17, the filtering device 200 is provided with a shielding portion 220, and an inner wall of the mounting cavity 103 is provided with a stop protrusion 106. When the filtering device 200 is mounted in the mounting cavity 103, the shielding portion 220 abuts against the stop protrusion 106 and covers the assembly and disassembly port 104.

By providing the shielding portion 220, the assembly and disassembly port 104 can be covered and sealed with the shielding portion 220, which reduces the probability of the liquid in the pool 4 flowing into or out of the body 100 through the assembly and disassembly port 104, and prevents the filtered debris inside the filtering device 200 from leaking out through the assembly and disassembly port 104, thereby ensuring the cleaning effectiveness of the pool cleaning robot 1.

In addition, a side surface of the shielding portion 220 away from the filtering device 200 may be flush with the outer surface of the body 100 in a same plane or curved surface, improving the visual neatness and reducing the likelihood and amount of dirt accumulation at the junction between the shielding portion 220 and the body 100.

Further, the cooperation between the shielding portion 220 and the stop protrusion 106 can optimize the positioning between the filtering device 200 and the body 100, improve assembly precision, prevent the filtering device 200 from being inserted too deeply into the mounting cavity 103, and provide a feedback when it is in place, thereby facilitating the mounting process.

As shown in Figs. 16 and 17, a groove 221 is provided on a side of the shielding portion 220 away from the filtering device 200, and a second handle 222 is provided within the groove 221 for being lifted. Users can grip the second handle 222 by inserting their fingers into a gap between the second handle 222 and the bottom of the groove 221 to push or pull the filtering device 200.

By way of examples, the second handle 222 may be fixedly connected to the shielding portion 220, and the second handle 222 and the shielding portion 220 can be integrally formed in a single molding process, which improves production efficiency and ensures high-strength connection between the second handle 222 and the shielding portion 220 with a simple structure. A side surface of the second handle 222 away from the filtering device 200 does not protrude beyond a side surface of the shielding portion 220 away from the filtering device 200. During the movement of the pool cleaning robot 1, the second handle 222 is not prone to collisions. Further, a side surface of the second handle 222 away from the filtering device 200 can be flush with a side surface of the shielding portion 220 away from the filtering device 200. In this way, while avoiding collisions of the second handle 222, a gap between the second handle 222 and the bottom of the groove 221 can be increased, thereby facilitating the user's grip of the second handle 222.

Alternatively, the second handle 222 is rotatable relative to the shielding portion 220. By rotating relative to the shielding portion 220, the second handle 222 can be accommodated within the groove 221. At this time, the second handle 222 does not protrude beyond a side surface of the shielding portion 220 away from the filtering device 200, allowing the pool cleaning robot 1 to move. The second handle 222 can also protrude beyond the groove 221, so that the filtering device 200 can be pushed or pulled. In this way, when the second handle 222 is accommodated within the groove 221, it is less prone to collisions during the movement of the pool cleaning robot 1. When the second handle 222 protrudes out of the groove 221, a gap between the second handle 222 and the bottom of the groove 221 increases, making it easier for a hand to grip the second handle 222.

As shown in Figs. 9, 10, 11, and 18, in some embodiments of the present application, the pool cleaning robot further comprises a buoyancy control device 800 and a traveling device 300. The buoyancy control device 800 is provided on the body 100 and is configured to control the ascent or descent of the pool cleaning robot 1 in the pool 4. The traveling device 300 comprises a caterpillar track and a roller 500. The caterpillar track is arranged on the body 100, with the lower surface of the caterpillar track extending downward beyond a lower surface of the body 100. At least a portion of an upper part of the caterpillar track 100 is shielded by the body 100, and the roller 500 is rotatably arranged on the body 100. When the caterpillar track is in contact with the surface of the pool 4, the pool cleaning robot 1 is driven to move by the friction between the caterpillar track and the surface of the pool 4. When the caterpillar track is separated from the surface of the pool 4, the pool cleaning robot 1 is driven to move by an acting force generated by the operation of the caterpillar track and/or the roller 500 in the water.

When the caterpillar track is separated from the surface of the pool 4, the upper part of the caterpillar track agitates the liquid in the pool 4, generating a first acting force, and the lower part of the caterpillar track agitates the liquid in the pool 4, generating a second acting force, wherein the first acting force is smaller than the second acting force. A first driving force is generated from the difference between the first acting force and the second acting force, and drives the pool cleaning robot 1 to move.

The buoyancy control device 800 may be a buoyancy chamber. By adjusting the volume of the buoyancy chamber and the amount of liquid therein, the pool cleaning robot 1 is enabled to ascend or descend in the pool 4. Alternatively, the buoyancy control device 800 may adopt a winch-based solution, in which the rotation of a winch controls the length of a rope and thereby adjusts the position of a piston to adjust the liquid volume, allowing the pool cleaning robot 1 to ascend or descend in the pool 4. As another alternative, the buoyancy control device 800 may adopt a diaphragm pump solution, in which water is pumped in or out by a diaphragm pump to adjust the liquid volume. Compared to prior art that uses a structure such as a pull rope fixed on the poolside to pull the pool cleaning robot out of the pool, the integration of a buoyancy control device 800 into the pool cleaning robot 1 in the present application eliminates the need to additionally set up a structure on the poolside to pull the pool cleaning robot 1. This reduces cost and avoids occupying extra space at the poolside.

The traveling device 300 employs a caterpillar track. When the caterpillar track is separated from the surface of the pool 4, if the upper part of the caterpillar track moves forward while the lower part of the caterpillar track moves backward, the upper part of the caterpillar track drives the liquid to move forward, and the liquid exerts a first acting force on the caterpillar track in a backward direction. Meanwhile, the lower part of the caterpillar track drives the liquid to move backward, and the liquid exerts a second acting force on the caterpillar track in a forward direction. The difference between the first acting force and the second acting force generates a first driving force in the forward direction, thereby causing the pool cleaning robot 1 to move forward. Conversely, if the upper part of the caterpillar track moves backward while the lower part of the caterpillar track moves forward, the upper part of the caterpillar track drives the liquid to move backward, and the liquid exerts a first acting force on the caterpillar track in the forward direction. The lower part of the caterpillar track drives the liquid to move forward, and the liquid exerts a second acting force on the caterpillar track in the backward direction. The difference between the first and second acting forces generates a first driving force in the backward direction, thereby causing the pool cleaning robot 1 to move backward.

It can be seen that, by changing the movement direction of the caterpillar track, the movement direction of the body 100 can be changed.

By way of examples, a plurality of tabs 330 may be provided on an outer circumferential surface of the caterpillar track, and are arranged at intervals along the circumferential direction of the caterpillar track. On the one hand, the contact area between the caterpillar track and the liquid is increased, thereby generating a greater first driving force when the caterpillar track is separated from the surface of the pool 4, and increasing the movement speed of the pool cleaning robot 1. On the other hand, when the caterpillar track is in contact with the surface of the pool 4, the tabs 330 are in contact with the surface of the pool 4, which helps to adjust the friction between the caterpillar track and the surface of the pool 4.

In the embodiments of the present application, the pool cleaning robot 1 is provided with a caterpillar track, and at least a portion of an upper part of the caterpillar track is shielded by the body 100. This not only does not affect the movement of the pool cleaning robot 1 along the surface of the pool 4 via the caterpillar track, but also enables the pool cleaning robot 1 to move while floating in the liquid by agitating the liquid with the caterpillar track, without the need to arrange additional driving structures, which reduces the number of components of the pool cleaning robot 1, simplifies the structure, and lowers the cost.

As shown in Figs. 11, 18, 19, and 20, the body 100 has a first direction (as indicated by arrow A in the drawings) and a second direction (as indicated by arrow B in the drawings), the first direction, the second direction and the height direction of the body 100 (as indicated by arrow C in the drawings) being perpendicular to each other. A plurality of caterpillar tracks are provided and comprise a first caterpillar track 310 and a second caterpillar track 320. The first caterpillar track 310 and the second caterpillar track 320 are respectively arranged on two opposite sides of the body 100 in the first direction, and the caterpillar tracks extend in the second direction. When the caterpillar tracks are in contact with the surface of the pool 4, the pool cleaning robot 1 is driven to move in the second direction by the friction between the caterpillar tracks and the surface of the pool 4. When the caterpillar tracks are separated from the surface of the pool 4, the pool cleaning robot 1 is driven to move in the second direction by a driving force generated by the agitation of the liquid in the pool 4 by the caterpillar tracks.

That is, when the caterpillar tracks move relative to the body 100, they drive the body 100 to move in the second direction. Since the first caterpillar track 310 and the second caterpillar track 320 are arranged on two opposite sides of the body 100 in the first direction, the forces on the two opposite sides of the body 100 in the first direction are more evenly distributed, thereby improving the movement stability of the pool cleaning robot 1.

In addition, by configuring a plurality of caterpillar tracks, the overall surface area of the caterpillar tracks is effectively increased. When the pool cleaning robot 1 moves along the surface of the pool 4, the contact area between the caterpillar tracks and the surface of the pool 4 is larger, resulting in greater friction between the caterpillar tracks and the pool surface, which can improve both the movement speed and stability of the pool cleaning robot 1. When the pool cleaning robot 1 is separated from the surface of the pool 4, each caterpillar track can generate a first driving force for driving the pool cleaning robot 1 to move, thereby increasing the total driving force acting on the pool cleaning robot 1, which can further improve the movement speed and stability of the pool cleaning robot 1.

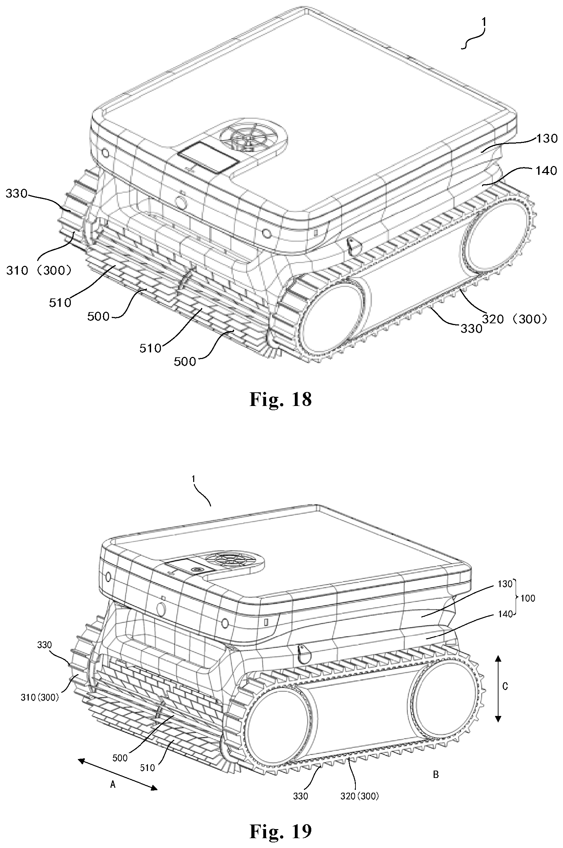

As shown in Figs. 18 to 20, the body 100 comprises a main body 130 and shielding rims 140.

The main body 130 is provided with a water inlet 110 and a water outlet 120. A first caterpillar track 310 and a second caterpillar track 320 are respectively arranged on two opposite sides of the main body 130 in the first direction. The shielding rims 140 are arranged on two opposite side surfaces of the main body 130 in the second direction.

The main body 130 and the shielding rims 140 may be integrally formed. In this case, arc-shaped transitions may be provided between the main body 130 and the shielding rims 140 to reduce the probability of stress concentration, improve the connection strength between the main body 130 and the shielding rims 140. It allows for one molding process via a mold, thereby reducing mounting/dismounting steps and improving production efficiency. Alternatively, the main body 130 and the shielding rims 140 may be separately formed. For example, the main body 130 and the shielding rims 140 may be connected by snap-fit, threaded connection, or adhesive bonding, or the like. In this case, the shielding rims 140 can be mounted to or dismounted from the main body 130 and serve as an optional structure to meet the needs of different users.

The shielding rims 140 are located above and spaced apart from the caterpillar tracks, and are configured to shield at least portions of upper parts of the caterpillar tracks. In other words, each shielding rim 140 is used to shield the caterpillar track that is located on a same side of the main body 130 as the shielding rim 140. By providing the shielding rims 140 to shield the caterpillar tracks, it is not necessary to embed the caterpillar tracks into the original surfaces of the main body 130, such that there is no need for the caterpillar tracks to occupy the existing space of the main body 130, thereby avoiding a reduction in the available space of the main body 130. This arrangement enables the upper parts of the caterpillar tracks to be shielded without altering the original structural layout of the main body 130.

As shown in Figs. 18 to 20, the side of the first caterpillar track 310 away from the second caterpillar track 320 extends beyond one of the shielding rims 140, and the side of the second caterpillar track 320 away from the first caterpillar track 310 extends beyond one of the shielding rims 140. In this way, the dimensions of the shielding rims 140 in the first direction are relatively small, which reduces the overall cost while allowing the upper parts of the caterpillar tracks to be shielded.

By way of examples, the size of the upper part of each caterpillar track that is shielded by a corresponding shielding rim 140 in the first direction is no less than half of the total size of the upper part of the caterpillar track in the first direction, which ensures that the difference between the first acting force and the second acting force of each caterpillar track is sufficiently large, so that each caterpillar track can provide a sufficient first driving force to enable rapid movement of the pool cleaning robot 1.

As shown in Figs. 18 and 19, both ends of each caterpillar track extend beyond the body 100 in the second direction. This effectively increases the surface area of the caterpillar track. When the pool cleaning robot 1 moves along the surface of the pool 4, the contact area between each caterpillar track and the surface of the pool 4 is increased, resulting in greater friction between the caterpillar track and the surface of the pool 4, which can improve both the movement speed and the stability of the pool cleaning robot 1. When the pool cleaning robot 1 is separated from the surface of the pool 4, a single caterpillar track can generate a greater first driving force for driving the pool cleaning robot 1 to move, thus the driving force on the pool cleaning robot 1 is greater, which can improve both the movement speed and the stability of the pool cleaning robot 1.

As shown in Figs. 9 and 10 and Figs. 18 to 21, the roller 500 is rotatably provided on the body 100 and at one side of the body 100 in the second direction, with the water inlet 110 and the roller 500 located on a same side of the body 100. When the roller 500 rotates relative to the body 100, the roller 500 drives the liquid in the pool 4 to flow into the water inlet 110. By providing the roller 500, the liquid in the pool 4 can be guided more rapidly into the filtering device 200 through the water inlet 110. This improves the cleaning efficiency of the filtering device 200 for the pool 4 within the same amount of time. Additionally, the roller 500 can also contact the surface of the pool 4 and generate friction, providing a driving force for the movement of the pool cleaning robot 1.

As shown in Figs. 9 and 10 and Figs. 18 to 21, at least a portion of the upper part of the roller 500 is shielded by the body 100. When the caterpillar track is separated from the surface of the pool 4, the upper part of the roller 500 agitates the liquid in the pool 4, generating a third acting force, while the lower part of the roller 500 agitates the liquid in the pool 4, generating a fourth acting force. The third acting force is smaller than the fourth acting force, and a second driving force is generated from the difference between the third acting force and the fourth acting force. The first driving force and the second driving force together drive the pool cleaning robot 1 to move.

Specifically, when a second driving force is required to be generated by the roller 500 to drive the pool cleaning robot 1 to move, the rotational direction of the roller 500 is the same as that of the caterpillar track. The first driving force from the caterpillar track and the second driving force from the roller 500 drive the pool cleaning robot 1 to move in the same direction. The first and second driving forces act in a superimposed manner on the pool cleaning robot 1, thereby preventing any partial or complete offset between the first driving force from the caterpillar track and the second driving force from the roller 500.

In this way, when the caterpillar track is separated from the surface of the pool 4, the driving force acting on the pool cleaning robot 1 is increased, which helps improve the movement speed of the pool cleaning robot 1. Further, the roller 500 not only serves to accelerate the flow of the liquid in the pool 4 into the filtering device 200, thereby improving the filtration speed, but also functions to drive the pool cleaning robot 1 to move while floating in the water. This enables the dual functions of the roller 500, increasing the movement speed of the pool cleaning robot 1 without the need for additional components.

As shown in Figs. 18 and 19, the outer surface of the roller 500 is provided with a plurality of flexible paddles 510, which may be integrally formed with the roller 500. The flexible paddles 510 are arranged at intervals along the circumferential direction of the roller 500, and each of the flexible paddles 510 extends in the axial direction of the roller 500. By providing the flexible paddles 510, the contact area between the roller 500 and the liquid in the pool 4 can be increased. On the one hand, this allows the liquid in the pool 4 to be guided to the water inlet 110 more rapidly, thereby improving cleaning efficiency. On the other hand, when the caterpillar track is separated from the surface of the pool 4, the roller 500 generates a greater second driving force, thereby increasing the driving force acting on the pool cleaning robot 1 and increasing the movement speed of the pool cleaning robot 1.

At least one of the flexible paddles 510 extends downward beyond the caterpillar track. Since the flexible paddles 510 have relatively low hardness, they are easily deformed. When the roller 500 rotates relative to the body 100, different flexible paddles 510 extend downward beyond the caterpillar track. On the one hand, this increases the radial dimensions of the flexible paddles 510 on the roller 500, which helps to further increase the contact area between the roller 500 and the liquid in the pool 4, thereby in turn improving cleaning efficiency and increasing the movement speed of the pool cleaning robot 1. On the other hand, when the caterpillar track is in contact with the surface of the pool 4, the flexible paddles 510 also contact the surface of the pool 4 and move relative to the surface of the pool 4, thus cleaning the surface of the pool 4, scrubbing off dirt and debris deposited on the surface of the pool 4, and thereby improving the cleanliness of the surface of the pool 4.

As shown in Figs. 18 and 19, the roller 500 extends beyond the body 100 in the first direction. This effectively increases the surface area of the roller 500. When the pool cleaning robot 1 moves along the surface of the pool 4, the contact area between the roller 500 and the surface of the pool 4 is greater, which results in better cleaning effect on the surface of the pool 4. When the pool cleaning robot 1 is separated from the surface of the pool 4, the roller 500 can generate a greater second driving force for driving the pool cleaning robot 1 to move, thereby increasing the driving force acting on the pool cleaning robot 1, which can improve both the movement speed and stability of the pool cleaning robot 1.

In addition, the roller 500 does not excessively occupy the space of the body 100, thereby avoiding an excessive reduction in the available space of the body 100. This enables the upper portion of the roller 500 to be shielded while minimizing changes to the original structural layout of the body 100, thus reducing the likelihood of modifications to the body 100.

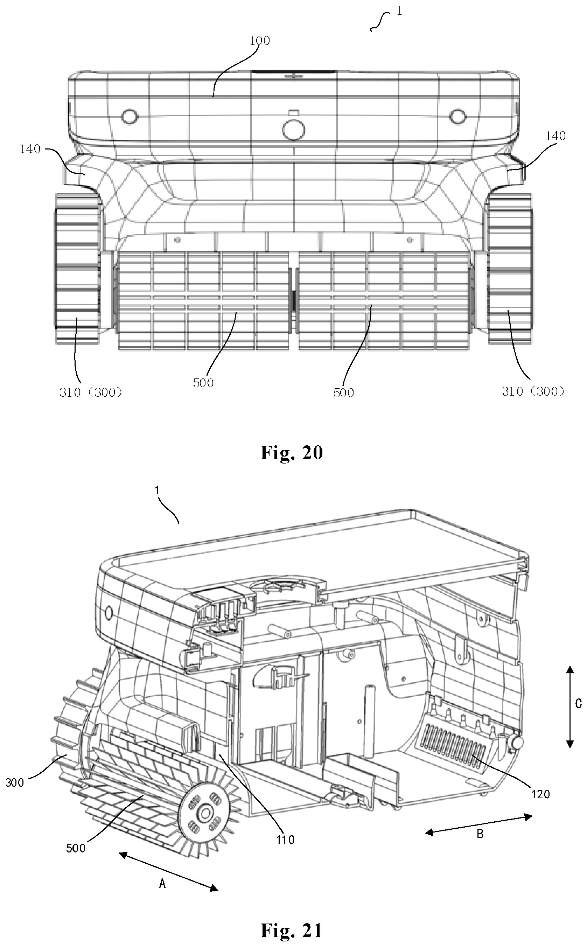

As shown in Figs. 18 and 20, a plurality of rollers 500 are provided, and are arranged along the axial directions of the rollers 500. By way of examples, the ends of the overall structure formed by the plurality of rollers 500 may extend to the first caterpillar track 310 and the second caterpillar track 320, thereby maximizing the overall length of the plurality of rollers 500.

By providing a plurality of rollers 500, the total surface area of the rollers 500 is effectively increased. When the pool cleaning robot 1 moves along the surface of the pool 4, the contact area between the rollers 500 and the surface of the pool 4 is increased, thereby improving the cleaning efficiency for the surface of the pool 4. When the pool cleaning robot 1 is separated from the surface of the pool 4, each roller 500 can generate a second driving force for driving the pool cleaning robot 1 to move, resulting in a greater driving force acting on the pool cleaning robot 1, which can improve both the movement speed and stability of the pool cleaning robot 1.

In a second aspect, embodiments of the present application provide a pool cleaning system. As shown in Figs. 1 to 3, the pool cleaning system 2 comprises a base station 3 and a pool cleaning robot 1 described in the above embodiments. The pool cleaning robot 1 has a return-to-base mode. When in the return-to-base mode, the pool cleaning robot 1 moves toward the base station 3 based on a signal from a debris identification device 400.

By utilizing the pool cleaning robot 1 mentioned above, the pool cleaning system 2 according to the embodiments of the present application not only can clean debris at the pool bottom and at the liquid surface 7, but also has a shorter movement stroke on the liquid surface 7, reducing the fluctuation of the liquid surface 7 and improving cleaning efficiency.

In addition, by providing a debris identification device 400, the image of the sidewall 6 of the pool on a side of the pool cleaning robot 1 can be captured, allowing the pool cleaning robot 1 to move along the sidewall 6 of the pool 4, thereby increasing the probability of the pool cleaning robot 1 moving to the docking station 3.

In some embodiments of the present application, the debris identification device 400 comprises an image capturing device, which is configured to capture an image within the pool 4, such as an image capturing device to capture an image of the liquid surface of the pool 4, an image capturing device to capture an image of the bottom wall 5 of the pool 4, or an image capturing device to capture an image of the sidewall 6 of the pool 4.

The base station 3 is provided with a display screen, which is electrically or optically connected to the image capturing device. The display screen is configured to display the image captured by the image capturing device. Alternatively, the pool cleaning system 2 also comprises a mobile terminal, which is electrically or optically connected to the image capturing device. The mobile terminal is configured to display the image captured by the image capturing device, where the mobile terminal can be a smartphone, laptop, tablet, or the like.

In this way, a user can view the images captured by the image capturing device through the display screen or the mobile terminal, allowing the user to clearly see whether there is any debris remaining at the bottom wall, sidewalls, or liquid surface of the pool 4. This allows the user to know the current cleaning level of the pool 4, enabling the user to decide whether the cleaning of the pool 4 can be completed, ensuring that the pool 4 is cleaned according to the user's requirements. It provides timely feedback to the user with a high level of visualization, optimizing the usage experience of the user.

In the drawings of these embodiments, identical or similar reference signs correspond to identical or similar components. In the description of the present application, it should be understood that terms such as 'up,' 'down,' 'left,' 'right,' and other positional relationships are based on the orientation or positional relationships shown in the drawings, and are only for convenience in describing and simplifying the description of the present application, rather than indicating or implying that the described devices or components must have a specific orientation or be constructed and operated in a particular way. Therefore, the terms describing positional relationships in the drawings are used for illustrative purposes only and should not be interpreted as a limitation of the present application. For those skilled in the art, the specific meaning of the above terms can be understood according to the specific circumstances.

The above description is only for the preferred embodiments of the present application and should not be construed as limiting the present application. Any modifications, equivalent replacements, or improvements made within the spirit and principles of the present application are included within the protection scope of the present application.

## Claims

1. A pool cleaning robot, comprising:
a body;
a filtering device arranged on the body, the filtering device being provided with a dirt holding space;
a buoyancy control device arranged on the body, the buoyancy control device being configured to enable the pool cleaning robot to switch between a first mode and a second mode; wherein, when in the first mode, the pool cleaning robot is at a water surface, and when in the second mode, the pool cleaning robot is located underwater and in contact with a bottom wall of a pool.

2. The pool cleaning robot according to claim 1, wherein, it further comprises a debris identification device arranged on the body, the debris identification device being configured to identify debris located at a liquid surface of the pool and/or at the bottom wall of the pool.

3. The pool cleaning robot according to claim 2, wherein, the debris identification device comprises an image capturing device, the image capturing device being configured to capture an image of the liquid surface of the pool, and/or the image capturing device being configured to capture an image of the bottom wall of the pool.

4. The pool cleaning robot according to claim 3, wherein, the image capturing device is rotatable relative to the body between a first position and a second position, and configured to identify debris located at the liquid surface of the pool when the image capturing device is in the first position, and to identify debris located at the bottom wall of the pool when the image capturing device is in the second position.

5. The pool cleaning robot according to claim 3, wherein, it further comprises:
a roller rotatably arranged on the body;
wherein, the image capturing device and the roller are arranged on a same side of the body, and the image capturing device is located above the roller.

6. The pool cleaning robot according to claim 3, wherein, when the pool cleaning robot is in the first mode, the image capturing device is configured to capture the image of the liquid surface of the pool, and/or the image capturing device is configured to capture the image of the bottom wall of the pool.

7. The pool cleaning robot according to claim 3, wherein the pool cleaning robot further comprises a traveling device, which is rotatably arranged on the body and configured to contact the bottom wall and/or a side wall of the pool;
the traveling device is provided on two opposite sides of the body, the image capturing device and the traveling device are arranged on a same side of the body and the image capturing device is located above the traveling device.

8. The pool cleaning robot according to claim 3, wherein, the image capturing device is rotatable relative to the body in a vertical direction; and/or
the image capturing device is rotatable relative to the body in a horizontal direction.

9. The pool cleaning robot according to claim 3, wherein, the image capturing device is movable relative to the body between an extended position and a retracted position, wherein the image capturing device does not protrude beyond an outer surface of the body when the image capturing device is in the retracted position, and at least a portion of the image capturing device protrudes beyond the outer surface of the body when the image capturing device is in the extended position.

10. The pool cleaning robot according to any one of claims 2 to 9, wherein it further comprises:
a base detachably provided on the body, the image capturing device being arranged on the base;
a signal transmission device arranged on the base and electrically connected to the image capturing device;
a functional device arranged on the base and electrically connected to the signal transmission device.

11. The pool cleaning robot according to claim 1, wherein the body is provided with a mounting cavity, the filtering device being detachably arranged in the mounting cavity of the body;
the filtering device is removable from the mounting cavity when the pool cleaning robot is in the first mode.

12. The pool cleaning robot according to claim 11, wherein, the body is provided with an assembly and disassembly port, the assembly and disassembly port being in communication with the mounting cavity, the filtering device being mounted into or removed from the mounting cavity through the assembly and disassembly port;
the pool cleaning robot emerges to the liquid surface of the pool by means of the buoyancy control device, such that the assembly and disassembly port is exposed above the liquid surface of the pool.

13. The pool cleaning robot according to claim 11, wherein, the filtering device is arranged in the mounting cavity of the body such that the filtering device can be pushed into or pulled out of the mounting cavity.

14. The pool cleaning robot according to claim 12, wherein the pool cleaning robot further comprises:
a traveling device rotatably arranged on the body, the traveling device being in contact with a surface of the pool and driving the pool cleaning robot to move by friction between the traveling device and the surface of the pool;
wherein, the pool cleaning robot has a first direction and a second direction, the first direction, the second direction and a height direction of the pool cleaning robot being perpendicular to each other; a rotation axis of the traveling device extends in the first direction and when the traveling device rotates relative to the body, the traveling device drives the pool cleaning robot to move in the second direction;
wherein, the assembly and disassembly port is arranged on an upper surface of the body, and/or the assembly and disassembly port is arranged on a side surface of the body.

15. The pool cleaning robot according to claim 14, wherein, when the assembly and disassembly port is arranged on the upper surface of the body, the filtering device and the buoyancy control device are arranged in the first direction and/or the second direction;
when the assembly and disassembly port is arranged on the side surface of the body in the first direction, the filtering device and the buoyancy control device are arranged in the height direction of the pool cleaning robot.

16. The pool cleaning robot according to claim 14, wherein, when the assembly and disassembly port is arranged on the side surface of the body in the first direction, the buoyancy control device is located below the filtering device.

17. The pool cleaning robot according to claim 12, wherein, it further comprises:
a cover plate movably arranged on the body between an open position and a closed position; wherein, when the cover plate is in the open position, the assembly and disassembly port is exposed; when the cover plate is in the closed position, the assembly and disassembly port is covered.

18. The pool cleaning robot according to claim 17, wherein, a first handle is provided at a side of the filtering device facing the cover plate, the first handle being movable relative to the filtering device between a lifting position and a retracted position;
wherein, when the first handle is in the lifting position, a portion of the first handle protrudes beyond a side surface of the filtering device facing the cover plate, for being lifted;
when the first handle is in the retracted position, the first handle does not protrude beyond the side surface of the filtering device facing the cover plate.

19. The pool cleaning robot according to claim 16, wherein, the cover plate is provided with a first limiting structure, and the body is provided with a second limiting structure, wherein the first limiting structure abuts against the second limiting structure when the cover plate is in the open position.

20. The pool cleaning robot according to claim 12, wherein, the filtering device is provided with a shielding portion, and an inner wall of the mounting cavity is provided with a stop protrusion, wherein the shielding portion abuts against the stop protrusion and covers the assembly and disassembly port when the filtering device is mounted in the mounting cavity.

21. The pool cleaning robot according to claim 20, wherein, a groove is provided on a side of the shielding portion away from the filtering device, and a second handle is provided within the groove for being lifted.

22. The pool cleaning robot according to claim 1, wherein, the pool cleaning robot further comprises:
a traveling device, comprising a caterpillar track arranged on the body;
a roller rotatably arranged on the body;
wherein, when the caterpillar track is in contact with a surface of the pool, the pool cleaning robot is driven to move by friction between the caterpillar track and the surface of the pool;
when the caterpillar track is separated from the surface of the pool, the pool cleaning robot is driven to move by an acting force generated by an operation of the caterpillar track and/or the roller in water.

23. The pool cleaning robot according to claim 22, wherein, a lower surface of the caterpillar track extends downward beyond a lower surface of the body, at least a portion of an upper part of the caterpillar track is shielded by the body;
at least a portion of an upper part of the roller is shielded by the body.

24. The pool cleaning robot according to claim 22, wherein, when the caterpillar track is separated from the surface of the pool, an upper part of the caterpillar track agitates liquid in the pool, generating a first acting force, and a lower part of the caterpillar track agitates the liquid in the pool, generating a second acting force, wherein the first acting force is smaller than the second acting force, a first driving force is generated from a difference between the first acting force and the second acting force and drives the pool cleaning robot to move; and/or
when the caterpillar track is separated from the surface of the pool, an upper part of the roller agitates the liquid in the pool, generating a third acting force, and a lower part of the roller agitates the liquid in the pool, generating a fourth acting force, wherein the third acting force is smaller than the fourth acting force, a second driving force is generated from a difference between the third acting force and the fourth acting force, and the first driving force and the second driving force together drive the pool cleaning robot to move.

25. The pool cleaning robot according to claim 22, wherein, the body has a first direction and a second direction, the first direction, the second direction and a height direction of the body being perpendicular to each other; both ends of the caterpillar track extend beyond the body in the second direction; and/or
the roller is located on a side of the body in the second direction.

26. The pool cleaning robot according to claim 25, wherein, a plurality of caterpillar tracks are provided and comprise a first caterpillar track and a second caterpillar track, the first caterpillar track and the second caterpillar track are respectively arranged on two opposite sides of the body in the first direction, and the caterpillar tracks extend in the second direction;
wherein, when the caterpillar tracks are in contact with the surface of the pool, the pool cleaning robot is driven to move in the second direction by friction between the caterpillar tracks and the surface of the pool;
when the caterpillar tracks are separated from the surface of the pool, the pool cleaning robot is driven to move in the second direction by a driving force generated by agitation of liquid in the pool by the caterpillar tracks.

27. The pool cleaning robot according to claim 26, wherein, the first caterpillar track and the second caterpillar track are respectively arranged on two opposite sides of a main body in the first direction;
shielding rims are provided on two opposite side surfaces of the main body in the second direction, the shielding rims are located above and spaced apart from the caterpillar tracks, and are configured to shield at least portions of upper parts of the caterpillar tracks.

28. The pool cleaning robot according to claim 27, wherein, a side of the first caterpillar track away from the second caterpillar track extends beyond one of the shielding rims, and a side of the second caterpillar track away from the first caterpillar track extends beyond one of the shielding rims.

29. The pool cleaning robot according to claim 25, wherein, an outer surface of the roller is provided with a plurality of flexible paddles arranged at intervals along a circumferential direction of the roller, each of the flexible paddles extends in an axial direction of the roller, at least one of the flexible paddles extends downward beyond the caterpillar track.

30. The pool cleaning robot according to claim 25, wherein, the roller protrudes beyond the body in the first direction;
a plurality of rollers are provided, and are arranged along axial directions of the rollers.

31. A pool cleaning system, comprising:
a base station; and
the pool cleaning robot according to any one of claims 1 to 30, wherein the pool cleaning robot has a return-to-base mode, wherein, when in the return-to-base mode, the pool cleaning robot moves toward the base station based on a signal from a debris identification device.

32. The pool cleaning system according to claim 31, wherein, the base station is provided with a display screen electrically or optically connected to the debris identification device, the display screen being configured to display an image captured by the debris identification device, and/or, the pool cleaning system further comprises a mobile terminal electrically or optically connected to the debris identification device, the mobile terminal being configured to display the image captured by the debris identification device.
